# NEUE EUROPÄISCHE PATENTSCHRIFT

(11) **EP 1 371 762 B2**
(45) Veröffentlichungstag und Bekanntmachung des Hinweises auf die Entscheidung über den Einspruch: **05.03.2014**
(45) Hinweis auf die Patenterteilung: 20.05.2009
(21) Anmeldenummer: 03006587.4
(22) Anmeldetag: 24.03.2003
(51) Int. Cl.: B29C 61/06, D03D 3/02

(54) **Gewebeschlauch**
Woven hose
Tuyau tissé

(30) Priorität: 22.03.2002 DE 10212920
(43) Veröffentlichungstag der Anmeldung: 17.12.2003
(73) Patentinhaber: Iprotex GmbH & Co. KG, 95234 Sparneck (DE)
(72) Erfinder: Piwonski, Timo, 96364 Marktrodach (DE)
(74) Vertreter: Fischer, Matthias

(56) Entgegenhaltungen:
- EP-A- 0 324 630
- WO-A-98/54393
- US-B1- 6 265 039

## Beschreibung

Die vorliegende Erfindung betrifft einen radial schrumpfbaren Gewebeschlauch gemäß dem Oberbegriff von Anspruch 1 mit Schußfäden aus hochschrumpfbarem Material.

Aus dem US-Patent Nr. 4,820,561 von Pithouse et al. ist ein in der Dimension rückstellbarer Gegenstand in einer Verbundstruktur eines wärmerückstellbaren Gewebes mit einer Polymermatrix bekannt, das z.B. zur Ummantelung von Kabelspleißstellen und dergleichen eingesetzt wird, um die entsprechende Kupplungsstelle gegen Feuchtigkeit, Chemikalien sowie Beschädigung durch Tiere zu schützen. Hierbei wird das Ummantelungsmaterial mit einer Beschichtung aus adhäsivem Material versehen, welches bei der Montage zu dem zu schützenden Gegenstand zeigend montiert wird. Die Beschichtung des gesamten Mantelmaterials mit einem adhäsiven Gewebe ist aufwendig und kostspielig und macht die Ummantelung voluminös. Die hier gezeigte Ummantelung wird aus einem Flächengebilde zu einem rohrförmigen Gegenstand geformt und erst mit einem separaten Verschlußmittel zu einer geschlossenen Ummantelung geformt.

Aus dem US-Patent 4,576,666 von Harris et al. ist ein wärmerückstellbarer Gegenstand bekannt, der ebenfalls aus einem flächenmäßigen Gebilde zu einem Rohr geformt und mit einem Verschlußmittel versehen ist. Vor dem thermischen Schrumpfen des zu einem rohrförmigen Gebilde geformten Gewebes, muß ein Verschluß angebracht werden, der außerdem noch gegen die Außenseite des umhüllenden Gegenstands aufträgt und, sofern der zu umhüllende Gegenstand eine nicht geradlinige Form hat, unter Zug- oder Druckspannung steht, wobei in sollen Fällen die Umhüllung relativ sperrig wird.

Die EP 0 324 630 A2 offenbart einen radial schrumpfbaren Gewebeschlauch mit Schussfäden aus hochschrumpfbarem Material und Kettfäden aus schrumpfarmen Material mit Schmelzkleberfäden in Form von Fäden, die in das Gewebe in Kett- und/oder Schussrichtung eingelegt sind.

Aus dem europäischen Patent EP 0 268 838 B1 (Verseidag) ist ein Flächengebilde aus Fasern, insbesondere als Verstärkungseinlage für Kunststoffteile bekannt. Dieses Flächengebilde kann für rohr- oder stangenförmige Bauteile schlauchförmig ausgebildet werden, zeichnet sich jedoch dadurch aus, daß die darin angeordneten Fäden nach Temperatureinwirkung zueinander Relativbewegungen durchführen können.

Die EP 0 175 554 A2 zeigt einen radial schrumpfbaren Gewebeschlauch gemäß dem Oberbegriff von Anspruch 1.

Es ist Aufgabe der vorliegenden Erfindung, einen radial schrumpfbaren Gewebeschlauch mit Schußfäden aus hochschrumpfbarem Material vorzuschlagen, der auf Stangen, Schläuchen, Profilen und dergleichen aufgeschrumpft werden und dort im wesentlichen unverrückbar fest angebracht werden kann und außerdem kostengünstig herzustellen ist.

Die Aufgabe wird gelöst mit einem Gewebeschlauch nach Anspruch 1. Der erfindungsgemäße Gewebeschlauch kann vorteilhafterweise sehr einfach auf sich längserstreckende Gegenstände aufgeschoben und durch Erwärmung nahezu unverrückbar festgelegt werden. Die Montage von Schlauchabschnitten beliebiger Länge "vor Ort" ist ebenso von Vorteil wie die platzsparende Lager- und Transporteignung des erfindungsgemäßen Gewebeschlauches. Daneben ergibt sich der außerordentliche Vorteil, daß beim Aufschrumpfen des Schlauches auf einen zu ummantelnden Gegenstand, das unter Zufuhr von Wärme durchgeführt wird, die im Gewebeschlauch eingelegten Schmelzkleberfäden gleichzeitig schmelzen und zwischen der Ummantelung und dem zu ummantelnden Gegenstand eine Klebeverbindung schaffen. Die hierdurch geschaffene Klebeverbindung zwischen dem erfindungsgemäßen Gewebeschlauch und dem Gegenstand kann in sehr kurzer Zeit und ohne großen zusätzlichen Wärmeaufwand erreicht werden, da der Schmelzkleber bereits beim Schrumpfungsprozeß schmilzt. Der Gewebeschlauch liegt nach dem Aufschrumpfungsvorgang unverrückbar auf dem Gegenstand fest. Ein weiterer besonderer Vorteil des erfindungsgemäßen Gewebeschlauchs besteht darin, daß die Schmelzkleberfäden schon beim Webvorgang des Schlauchs ohne großen Zusatzaufwand miteingelegt werden können. Es ist nicht, wie beim Stand der Technik diskutiert, ein zusätzlicher Arbeitsschritt für die Aufbringung eines adhäsiven Materials auf die Innenwand des Gewebeschlauchs erforderlich.

Eine vorteilhafte Ausbildung des erfindungsgemäßen Gewebeschlauchs besteht darin, daß die Schmelzkleberfäden nur in von den Schußumkehrstellen entfernten Bereichen eingelegt sind. Dies hat den Vorteil, daß das Material der Schmelzkleberfäden beim Schrumpfungsvorgang nicht an die äußere Oberfläche gelangen und zu Verunreinigungen und dergleichen an der äußeren Oberfläche des Gewebeschlauchs führen kann.

In einer anderen vorteilhaften Weiterbildung der Erfindung ist der Gewebeschlauch dadurch gekennzeichnet, daß er eine nicht lineare, sondern bogenförmige, Gestalt hat. Dies hat in solchen Fällen, in denen kurvenförmige Gegenstände ummantelt werden sollen, den Vorteil, daß beim Schrumpfen in sogenannten Innenkurven keine Stauchspannungen und in sogenannten Außenkurven keine Zugspannungen auftreten, die insgesamt eine ungleichmäßige Belastung des erfindungsgemäßen Gewebeschlauchs verursachen könnten.

In einer anderen vorteilhaften Weiterbildung der Erfindung ist der Gewebeschlauch dadurch ausgezeichnet, daß die Schmelzkleberfäden geeignet sind, nach einer einmaligen Erhitzung auf eine bestimmte Temperatur, irreversibel auszuhärten. Bei Verwendung eines derartigen Gewebeschlauchs in einer Umgebung, die die zur Verklebung erforderliche Temperatur übersteigt, ist keine Gefahr gegeben, daß sich der erfindungsgemäße Gewebeschlauch aufgrund der hohen Temperatur von dem Gegenstand, den er schützen soll, lösen kann.

In einer anderen vorteilhaften Weiterbildung der Erfindung weist der Gewebeschlauch in den Kantenbereichen und/oder in der Mitte der oberen und der unteren Gewebelage wenigstens einen gegenüber den anderen dickeren Kettfaden auf. Dadurch läßt sich vorteilhafterweise eine "Längsrippigkeit" schaffen. Die gegenüber den anderen dickeren Kettfäden wirken wie Abstandshalter zwischen den Gewebelagen und halten den Gewebeschlauch offen, wodurch die Montage erleichtert wird. Die beiden Gewebelagen liegen nicht so dicht beieinander wie bei gleichmäßig dicken Kettfäden und erlauben somit eine rationellere Einbringung des zu umantelnden Gegenstandes in des Schlauch.

Weitere Merkmale und Vorteile der Erfindung ergeben sich aus den Unteransprüchen.

Die Erfindung wird nun unter Zuhilfenahme der Zeichnung anhand eines Beispiels kurz erläutert.
Fig. 1 zeigt in schematischer Darstellung einen Querschnitt durch einen erfindungsgemäßen Gewebeschlauch.
Fig. 2 zeigt in schematischer Darstellung einen Längsschnitt durch einen erfindungsgemäßen Gewebeschlauch.
Fig. 3 zeigt schematisch in auseinandergezogener Darstellung die Anordnung von oberer Gewebelage und unterer Gewebelage eines verbindungsgemäßen Gewebeschlauchs sowie die Anbindung untereinander.
Fig. 4 zeigt die Darstellung der Anordnung gemäß Fig. 3, wobei zusätzlich Schmelzkleberfäden in Kette und Schuß von oberer Gewebelage und unterer Gewebelage dargestellt sind.

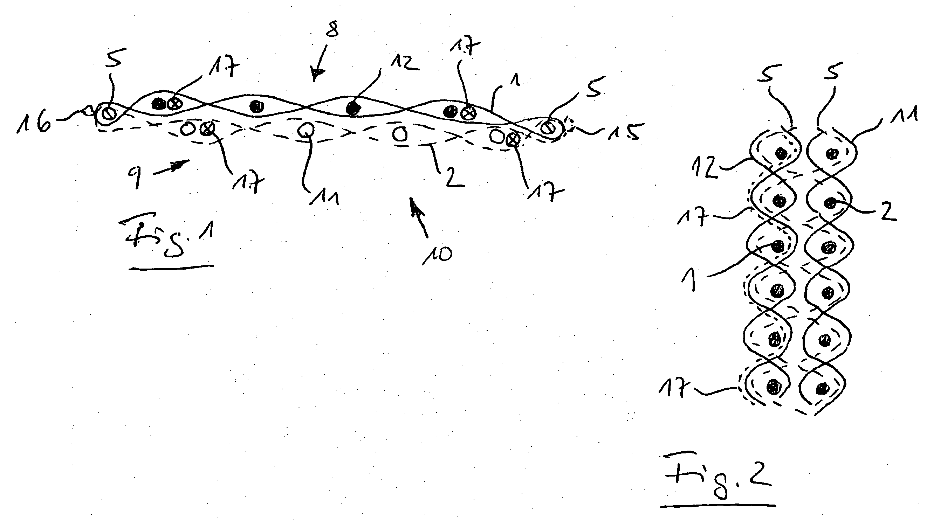

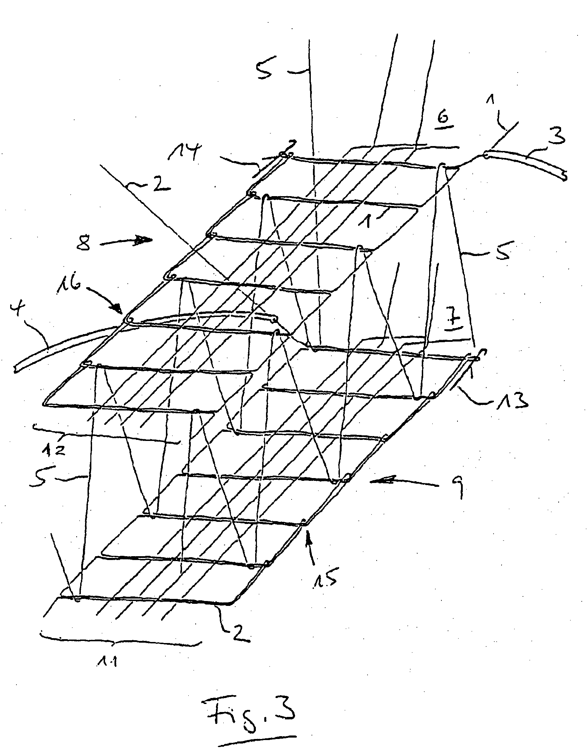

Fig. 1 zeigt einen Gewebeschlauch 10, geschnitten quer zur Längsrichtung des Gewebeschlauchs mit einer oberen Gewebelage 8 und einer unteren Gewebelage 9 sowie entsprechenden oberen Kettfäden 12 und unteren Kettfäden 11. Die Zahl der Kettfäden ist in einem derartigen Gewebeschlauch tatsächlich wesentlich höher. Zur Vereinfachung der Darstellung wurden hier jeweils symbolisch nur je vier Kettfäden dargestellt. Die obere Gewebelage 8 wird auch aus Schußfäden 1 gebildet, die untere Gewebelage 9 aus Schußfäden 2. Die Schußfäden 1 und 2 werden mittels in Fig. 3 abgebrochen dargestellten Schußnadeln 3 und 4 in das Band eingewebt, und zwar derart, daß der untere Schußfaden 2 mittels einer Wirknadel 13 in sich selbst vermascht wird, siehe Bezugszeichen 15 und der obere Schußfaden 1 mittels einer Wirknadel 14 in sich selbst vermascht wird, siehe Bezugszeichen 16. Diese Maschenbindungen sind symbolisch auch in Fig. 1 dargestellt. Die obere Gewebelage 8 und die untere Gewebelage 9 sind über Bindungsfäden 5 miteinander verbunden, so daß sich im Ergebnis ein gewebter Schlauch 10 ergibt. Die Schußfäden 1 und 2 des erfindungsgemäßen Gewebeschlauchs 10 bestehen aus hochschrumpfbarem Material. Hierzu eignet sich insbesondere ein thermoplastischer Werkstoff, wie zum Beispiel Polyolephinen (Polyester, LDPE, HDPE, LLDPE etc.) oder ein über die Verreckungsintensität modifiziertes Polyamid, wogegen für die unteren und oberen Kettfäden 11 und 12 vorzugsweise Polyester-Material eingesetzt wird.

Soll der hier dargestellte erfindungsgemäße Gewebeschlauch auf einem zu ummantelnden Gegenstand aufgeschrumpft werden, wird er auf den Gegenstand aufgeschoben und dann beispielsweise mit Heißluft oder im Rahmen der Weiterbehandlung in einem Vulkanisationsprozeß unter Dampf und/oder Druckbeaufschlagung oder einem anderen geeigneten Verfahren erwärmt. Die thermoplastischen Schußfäden 1 und 2 schrumpfen infolge der Erwärmung. Der Gewebeschlauch legt sich so eng wie möglich an den zu ummantelnden Gegenstand.

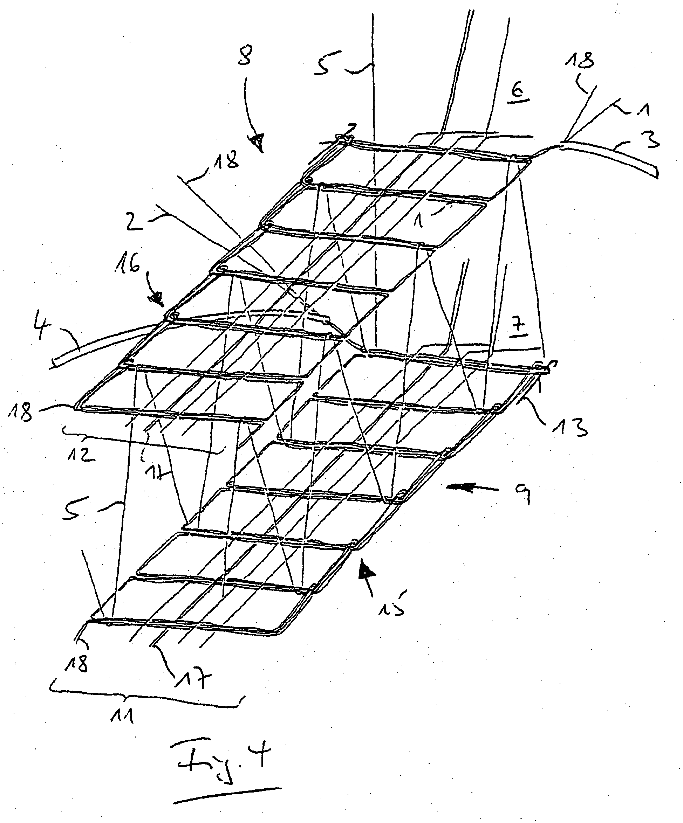

Um eine noch verbesserte Fixierung des Gewebeschlauchs am zu ummantelnden Gegenstand zu erreichen. insbesondere, wenn dieser eine geradlinige Form hat, werden zweckmäßigerweise Schmelzkleberfäden 17, 18 in Form von Fäden, Bändern oder Folien in das Gewebe in Kett- und/oder Schußrichtung eingelegt. Fig. 1, 3 und 4 zeigen die Anordnung von Schmelzkleberfäden 17 als parallel zu Kettfäden verlaufende Fäden eingesetzt. In Fig. 4 sind in der oberen 8 wie in der unteren 9 Gewebelage in Kette und Schuß eingesetzte Schmelzkleberfäden 17, 18 gezeigt. Die Schmelzkleberschußfäden 18 werden von den Schußnadeln 3 und 4 gleichzeitig mit den Schußfäden 1 und 2 verlegt.

Diese Schmelzkleberfäden werden bei der zuvor beschriebenen Erwärmung schmelzen und eine Adhäsion zwischen der Innenwand des Gewebeschlauchs und der Außenwand des zu ummantelnden Gegenstands schaffen und damit eine unverrückbare Ummantelung erzeugen.

Der in den Figuren 1 bis 3 dargestellte erfindungsgemäße Gewebeschlauch kann vorteilhafterweise mit geringstem Packungsvolumen als Rolle "in sich" aufgewickelt, gelagert und transportiert werden. Er wird bei Bedarf vor Ort in jede gewünschte Länge geschnitten, montiert und aufgeschrumpft. Der Kunde kann den erfindungsgemäßen Gewebeschlauch in großen Gebinden mit optimiertem Lagerplatzbedarf zwischenlagern und verarbeiten, im Einsatzfall auf Länge schneiden und verbauen. Vorteilhafterweise fällt hier außerdem nahezu kein Verschnitt an.

## Patentansprüche

1. Radial schrumpfbarer Gewebeschlauch (10) mit einer oberen und einer unteren Gewebelage (8; 9), mit Schußfäden (1; 2) aus hochschrumpfbarem Material und Kettfäden (11; 12) aus schrumpfarmem Material, mit Schmelzkleberfäden (17, 18) in Form von Fäden, Bändern oder Folien, die in das Gewebe (10) in Kett- und/oder Schußrichtung eingelegt sind, **dadurch gekennzeichnet, daß** die Schmelzkleberfäden (17, 18) derart eingelegt sind, daß sie im wesentlichen nur im Inneren des Gewebeschlauches (10) an die Oberfläche treten, wobei
die Schmelzkleberfäden (17, 18) nur in von den Schußumkehrstellen entfernten Bereichen eingelegt sind.

2. Gewebeschlauch nach Anspruch 1, **gekennzeichnet durch** multifile Kettfäden (11; 12) und monofile Schußfäden (1; 2).

3. Gewebeschlauch nach einem der Ansprüche 1 bis 2, **dadurch gekennzeichnet, daß** er rapportmäßig ungleichmäßig von der Webmaschine abgezogen ist und eine nichtzylindrische Form hat.

4. Gewebeschlauch nach einem der Ansprüche 1 bis 3, **dadurch gekennzeichnet, daß** die Schmelzkleberfäden (17, 18) nach einer einmaligen Erhitzung auf eine bestimmte Temperatur irreversibel ausgehärtet sind.

5. Gewebeschlauch nach einem der Ansprüche 1 bis 4, **dadurch gekennzeichnet, daß** er auf einer Nadelbandwebmaschine mit zwei gegenläufig arbeitenden Schußnadeln (3; 4) hergestellt ist.

6. Gewebeschlauch nach einem der Ansprüche 1 bis 5, **dadurch gekennzeichnet daß** die Kettfäden und/oder Schußfäden aus Polyestermaterial bestehen.

7. Gewebeschlauch nach einem der vorhergehenden Ansprüche, **dadurch gekennzeichnet, daß** er in den Kantenbereichen wenigstens einen gegenüber den anderen dickeren Kettfaden aufweist.

8. Gewebeschlauch nach einem der vorhergehenden Ansprüche, **dadurch gekennzeichnet, daß** er in der Mitte der oberen und der unteren Gewebelage (8; 10) wenigstens einen gegenüber den anderen dickeren Kettfaden aufweist.

## Claims

1. A radial shrinkable woven tubular fabric (10) having an upper and lower woven ply (8; 9) with weft threads (1, 2) of high shrinkage material and warp threads (11, 12) of low shrinkage material including hot-melt adhesive filaments (17, 18) in the form of threads, tapes or films inlaid in the woven fabric (10) in the warp and / or weft direction, **characterized in that** the hot-melt adhesive filaments (17, 18) are inlaid such that they surface substantially only in the interior of the woven tubular fabric (10), **characterized in that** the hot-melt adhesive filaments (17, 18) are inlaid only in portions remote from weft reversal locations.

2. The woven tubular fabric as set forth in claim 1, **characterized by** multifilament warp threads (11, 12) and monofilament weft threads (1; 2).

3. The woven tubular fabric as set forth in any of the claims 1 to 2, **characterized in that** it is drawn off from the loom in an irregular repeat, non-cylindrical in shape.

4. The woven tubular fabric as set forth in any of the claims 1 to 3, **characterized in that** the hot-melt adhesive filaments (17, 18) are irreversibly cured after once-only heating to a certain temperature.

5. The woven tubular fabric as set forth in any of the claims 1 to 4, **characterized in that** it is produced on a narrow fabric needle loom with two weft needles (3; 4) working counter-running.

6. The woven tubular fabric as set forth in any of the claims 1 to 5, **characterized in that** the warp threads and / or weft threads are made of a polyester material.

7. The woven tubular fabric as set forth in any of the preceding claims, **characterized in that** it comprises in the edge portions at least one warp thread thicker than the others.

8. The woven tubular fabric as set forth in any of the preceding claims, **characterized in that** it comprises in the middle of the upper and lower woven ply (8; 10) at least one warp thread thicker than the others.

## Revendications

1. Tuyau tissé (10) rétractable en sens radial comportant une couche tissée supérieure et une couche tissée inférieure (8; 9), comportant des fils de trame (1; 2) en matière hautement rétractable et des fils de chaine (11; 12) en matière faiblement rétractable, ainsi que des fils de colle fusible (17, 18) en forme de fils, bandes ou films, qui sont insérés dans le tissu (10) en direction de la chaîne et / ou de la trame, ainsi que les fils de colle fusible (17, 18) sont insérés de manière a ce qu'ils ne paraissent a la surface essentiellement qu'à l'intérieur du tuyau tisse (10), **caractérisé en ce que** les fils de colle fusible (1 7,18) ne sont insérés que dans les zones éloignées des endroits d'inversion de la trame.

2. Tuyau tissé selon la revendication 1, **caractérisé par** des fils de chaîne multifils (11; 12) et des fils de trame monofils (1; 2).

3. Tuyau tissé selon l'une quelconque des revendications 1 à 2, **caractérisé en ce qu'**en termes de rapport, il n'est retiré du métier a tisser qu'irrégulièrement et qu'il présente une forme non-cylindrique.

4. Tuyau tissé selon l'une quelconque des revendications 1 à 3, **caractérisé en ce que** les fils de colle fusible (17, 18) sont irréversiblement durcis après un réchauffement unique a une température déterminée.

5. Tuyau tissé selon l'une quelconque des revendications 1 à 4, **caractérisé en ce qu'**il est fabrique sur une machine à tisser les rubans à aiguilles avec deux aiguilles de trame (3; 4) travaillant en sens contraire.

6. Tuyau tissé selon l'une quelconque des revendications 1 à 5, **caractérisé en ce que** les fils de chaîne et / ou les fils de trame consistent en matière polyester.

7. Tuyau tissé selon l'une quelconque des revendications précédentes, **caractérisé en ce qu'**il présente dans les zones d'arêtes au moins un fil de chaîne plus épais par rapport aux autres.

8. Tuyau tissé selon l'une quelconque des revendications précédentes, **caractérisé en ce qu'**au milieu des couches de tissu supérieure et inférieure (8; 10), il présente au moins un fil de chaine plus épais par rapport aux autres.
